# FASCICULE DE BREVET EUROPEEN

(11) **EP 1 321 350 B1**
(45) Date de publication et mention de la délivrance du brevet: **24.05.2006**
(21) Numéro de dépôt: 02356264.8
(22) Date de dépôt: 16.12.2002
(51) Int. Cl.: B62D 5/04, F16D 3/74, F16D 3/76

(54) **Direction assistée électrique pour véhicule automobile**
Elektrische Servolenkung für ein Kraftfahrzeug
Electric power steering for a motor vehicle

(30) Priorité: 18.12.2001 FR 0116409
(43) Date de publication de la demande: 25.06.2003
(73) Titulaire: Société de Mécanique d'Irigny, 69540 Irigny (FR)
(72) Inventeur: Reynard, Bruno, 69008 Lyon (FR); Chauvrat, Philippe, 01480 Beauregard (FR); Marco, Pierre, 69008 Lyon (FR); Martin, Hervé, 07340 Bogy (FR)
(74) Mandataire: Bratel, Gérard

(56) Documents cités:
- WO-A-99/65758
- FR-A- 1 203 905
- US-A- 5 956 836
- PATENT ABSTRACTS OF JAPAN vol. 2000, no. 03, 30 mars 2000 (2000-03-30) -& JP 11 334614 A (AISIN SEIKI CO LTD), 7 décembre 1999 (1999-12-07)
- PATENT ABSTRACTS OF JAPAN vol. 013, no. 094 (M-804), 6 mars 1989 (1989-03-06) -& JP 63 285332 A (TAKARA KOGYO KK), 22 novembre 1988 (1988-11-22)

## Description

La présente invention concerne, de façon générale, les systèmes de direction pour véhicules automobiles. Elle se rapporte, plus particulièrement, aux directions de véhicules automobiles pourvues d'un dispositif d'assistance électrique. Encore plus spécialement, cette invention fournit un perfectionnement aux directions assistées électriques, visant à supprimer ou du moins à atténuer les vibrations et les bruits dans ce type de directions assistées.

Dans une direction assistée électrique, un moteur électrique est accouplé, par l'intermédiaire d'un réducteur de vitesse, à un élément mobile de la direction tel que la colonne de direction, le pignon de direction ou la crémaillère. Pour obtenir la démultiplication souhaitée, le réducteur intercalé entre le moteur électrique d'assistance et l'élément à entraîner peut être un réducteur du type à vis sans fin et roue tangente, ou un réducteur d'un autre type.

Un tel réducteur à engrenages est le siège de jeux, par exemple des jeux d'engrènement qui, en cours de fonctionnement, sont à l'origine de vibrations et de bruits plus ou moins gênants.

Par le document WO-A-99/65758 selon le préambule des revendications 1 et 3, il est connu de placer un élément d'accouplement élastique entre l'arbre et le rotor du moteur électrique d'assistance, d'une part, et l'arbre d'entrée du réducteur, d'autre part. Toutefois, dans ce document, un ressort presse l'arbre d'entrée du réducteur en direction du rotor du moteur électrique, pour empêcher les bruits et vibrations. Par ailleurs, l'élément d'entraînement situé du côté du moteur électrique possède une liaison par rotule avec l'arbre d'entrée du réducteur.

La présente invention vise à éliminer ces inconvénients, donc à supprimer ou du moins à atténuer les vibrations et bruits causés par les jeux de fonctionnement dans le réducteur, et transmis par voie aérienne ou solidienne.

A cet effet, l'invention se rapporte à une direction assistée électrique pour véhicule automobile, comprenant un moteur électrique d'assistance accouplé, par l'intermédiaire d'un réducteur à vis sans fin et roue tangente, à un élément mobile à entraîner de la direction, un accouplement élastique, travaillant en torsion, étant placé entre l'arbre du moteur électrique d'assistance, ou un élément d'entraînement directement lié à cet arbre, d'une part, et la vis d'entrée du réducteur, constituant l'arbre d'entrée de ce réducteur, disposée coaxialement à l'arbre du moteur électrique d'assistance ou à l'élément d'entraînement directement lié à cet arbre, d'autre part, de manière à filtrer ou atténuer les vibrations et bruits liés aux jeux du réducteur, l'accouplement élastique étant composé d'au moins une partie métallique rigide, liée à l'un des éléments à accoupler, du côté du moteur ou du réducteur, et d'une partie élastiquement déformable, en élastomère ou en caoutchouc, possédant une raideur angulaire adaptée, c'est-à-dire un coefficient caractéristique K pouvant être exprimé en N.m par degré, qui est dimensionnée en fonction du couple transmis et de l'inertie du système, notamment celle du moteur électrique d'assistance qui est situé "en amont" (par référence au sens général de transmission du couple).

Certes, on connaît déjà des accouplements élastiques, réalisés notamment sous la forme de manchons, qui travaillent en flexion et permettent de compenser un défaut d'alignement entre deux arbres rotatifs, dont l'un entraîne l'autre. Toutefois, l'accouplement élastique de la présente invention n'a pas cette fonction de compensation d'un éventuel défaut d'alignement entre l'arbre du moteur électrique d'assistance et l'arbre d'entrée du réducteur, tel que la vis sans fin de ce réducteur. En effet, dans le cas de la direction assistée électrique concernée, l'alignement entre le moteur électrique d'assistance et l'arbre d'entrée du réducteur est déjà convenablement assuré par le centrage du carter du moteur relativement au carter du réducteur, ce centrage étant réalisé avec des tolérances précises de concentricité et de perpendicularité. Du reste, l'accouplement élastique de la présente invention travaille essentiellement en torsion, et non en flexion.

Selon la configuration de cet accouplement élastique, l'invention donne lieu à divers modes de réalisation :

Dans une forme de réalisation particulière, l'accouplement élastique se compose de deux noyaux métalliques coaxiaux, réunis l'un à l'autre par surmoulage d'une partie intermédiaire élastiquement déformable , les deux noyaux métalliques étant rigidement liés, l'un, à l'arbre du moteur électrique d'assistance ou à l'élément d'entraînement lié à cet arbre, et l'autre, à la vis sans fin du réducteur. A cet effet, les deux noyaux métalliques peuvent comporter des cannelures extérieures ou intérieures, ou d'autres conformations adéquates, elles aussi extérieures ou intérieures, pour leur liaison par complémentarité de formes à l'arbre du moteur électrique d'assistance ou à l'élément d'entraînement de cet arbre, ou à la vis sans fin du réducteur.

Selon une autre forme de réalisation envisageable, la partie métallique est réunie à la partie élastiquement déformable par surmoulage , la partie métallique étant rigidement liée à l'arbre du moteur électrique d'assistance ou à l'élément d'entraînement lié à cet arbre, tandis que la partie élastiquement déformable comporte des conformations pour sa liaison directe avec l'extrémité de la vis sans fin du réducteur. Avantageusement, la partie métallique se présente comme un pot, dans lequel est surmoulée la partie en élastomère, elle-même évidée et pourvue de conformations intérieures pour sa liaison avec la vis sans fin du réducteur. On obtient ainsi un accouplement élastique simple (avec économie d'une pièce métallique par rapport à la précédente forme de réalisation) et particulièrement compact.

On notera que, dans l'une et l'autre des formes de réalisation précédemment indiquées, la ou les parties métalliques de l'accouplement élastique peuvent être liées, à l'arbre moteur ou à la vis sans fin du réducteur, non pas par coopération de conformations complémentaires, telles que cannelures, mais par un ajustement "serré", ce qui conduit à une simplification des formes.

L'invention sera mieux comprise à l'aide de la description qui suit, en référence au dessin schématique annexé représentant, à titre d'exemples, quelques formes d'exécution de cette direction assistée électrique pour véhicule automobile :
Figure 1 est une vue d'ensemble, extérieure, d'une direction assistée électrique conforme à l'invention ;
Figure 2 représente, partiellement en coupe, le moteur électrique d'assistance de cette direction, et le réducteur associé ;
Figure 3 est une vue partiellement en coupe axiale, et à échelle agrandie, de l'accouplement élastique monté entre le moteur électrique et le réducteur de la figure 2 ;
Figure 4 est une vue en coupe transversale de cet accouplement élastique, suivant IV-IV de figure 3 ;
Figure 5 est une vue en coupe axiale d'une autre forme de réalisation de l'accouplement élastique ;
Figure 6 est une vue en coupe transversale de ce dernier accouplement élastique, suivant IV-IV de figure 5 ;
Figure 7 illustre une application particulière de l'invention, utilisant l'accouplement élastique selon les figures 5 et 6.

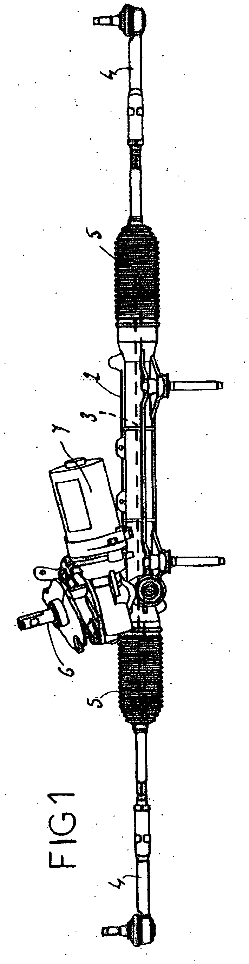

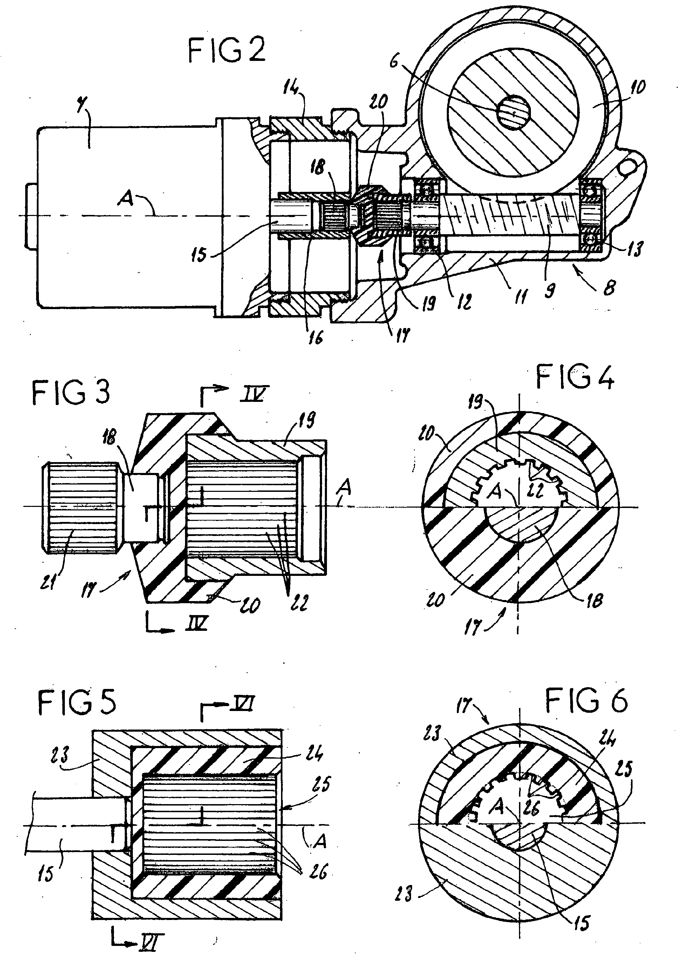

La figure 1 représente extérieurement une direction assistée électrique, la direction possédant un carter central tubulaire 2 dans lequel est montée coulissante une crémaillère 3. Les extrémités droite et gauche de la crémaillère 3, extérieures au carter 2, sont accouplées à des biellettes 4, tandis que deux soufflets 5, raccordés aux extrémités du carter, protègent les zones d'extrémité de la crémaillère 3. Celle-ci est en prise avec un pignon de direction, lié en rotation à une colonne de direction avec volant de conduite, le pignon de direction étant indiqué par son arbre 6 (voir aussi figure 2). S'agissant ici d'une direction assistée électrique, celle-ci comprend encore un moteur électrique d'assistance 7 à deux sens de rotation qui, par l'intermédiaire d'un réducteur 8, agit ici au niveau du pignon de direction (arbre 6).

Comme le montre plus particulièrement la figure 2, le réducteur 8 est ici du type à vis sans fin 9 et roue tangente 10, ces deux éléments étant logés à l'intérieur d'un carter 11. La vis sans fin 9 est montée tournante, dans des paliers 12 et 13, suivant l'axe A du moteur électrique d'assistance 7. Cette vis sans fin 9, qui constitue l'arbre d'entrée du réducteur 8, est en prise avec la roue tangente 10, elle-même liée en rotation à l'élément à entraîner, en particulier le pignon de direction (arbre 6).

Le stator du moteur électrique d'assistance 7 est lui-même assemblé de façon centrée, directement ou par l'intermédiaire d'une bride 14, sur le carter 11 du réducteur 8. Le rotor (non représenté) de ce moteur électrique d'assistance 7 comporte un arbre moteur 15, sur lequel est directement monté un élément d'entraînement 16 rigide, en forme de manchon.

Selon l'invention, un accouplement élastique 17 est placé entre l'élément d'entraînement 16 et la vis sans fin 9 du réducteur 8, constituant ici l'arbre d'entrée de ce réducteur 8.

Les figures 3 et 4 montrent, plus en détail, la structure de l'accouplement élastique 17, dans une première forme de réalisation de l'invention.

Cet accouplement élastique 17 se compose de deux noyaux métalliques 18 et 19, coaxiaux et opposés, qui sont réunis l'un à l'autre par une partie intermédiaire en élastomère 20, surmoulée.

Le premier noyau métallique 18, situé du côté du moteur électrique d'assistance 7, possède une confirmation pleine, de forme générale cylindrique. Ce noyau métallique 18 possède une conformation mâle ou femelle, complémentaire de l'extrémité de l'arbre moteur 15 ou de l'élément d'entraînement 16 lié à cet arbre 15, par exemple sous la forme de cannelures extérieures 21. Par ces cannelures extérieures 21, le noyau 18 est lié en rotation avec l'élément d'entraînement 16 en forme de manchon, dans lequel il est introduit, l'élément d'entraînement 16 possédant des cannelures intérieures complémentaires.

Le second noyau métallique 19, situé du côté du réducteur 8, possède une conformation mâle ou femelle, complémentaire de l'extrémité de l'arbre d'entrée du réducteur 8, par exemple une conformation creuse, en forme générale de manchon. Cet autre noyau métallique 19 comporte, par exemple, des cannelures intérieures 22. Par ces cannelures intérieures 22, le noyau 19 est lié en rotation avec la vis sans fin 9, sur l'extrémité de laquelle il se trouve engagé, ladite extrémité présentant des cannelures extérieures complémentaires.

L'accouplement élastique 17 étant ainsi monté entre le moteur électrique d'assistance 7 et le réducteur 8, comme montré sur la figure 2, la partie en élastomère 20 de cet accouplement 17 assure le filtrage des vibrations et bruits, engendrés par les jeux d'engrènement des éléments 9 et 10 du réducteur 8.

Les figures 5 et 6 illustrent une deuxième forme de réalisation de l'accouplement élastique 17, toujours placé entre le moteur électrique d'assistance 7 et la vis sans fin 9, qui constitue ici encore l'arbre d'entrée du réducteur 8. Cet autre accouplement élastique se compose d'une pièce métallique 23, telle qu'acier, et d'une partie en élastomère 24, surmoulée.

Plus particulièrement, la pièce métallique 23 se présente comme un pot, lequel est monté avec ajustement "serré" sur l'extrémité de l'arbre 15 du moteur électrique d'assistance 7. La partie en élastomère 24 est surmoulée dans la pièce métallique en pot 23. Cette partie en élastomère 24 est elle-même évidée, en son centre, son évidement central 25 étant pourvu d'une conformation mâle ou femelle complémentaire de l'extrémité de l'arbre d'entrée du réducteur 9, par exemple avec des cannelures intérieures 26. Par ses cannelures intérieures 26, la partie élastomère 24 est liée en rotation à l'extrémité de la vis sans fin 9, engagée dans l'évidement 25, cette extrémité étant pourvue de cannelures extérieures complémentaires.

Dans une disposition inverse, non illustrée, la pièce métallique est montée avec ajustement "serré" sur l'arbre d'entrée (vis sans fin 9) du réducteur 8.

Ainsi, la partie en élastomère 24 de l'accouplement 17 assure ici, comme dans la première forme de réalisation, le filtrage des vibrations et bruits, engendrés par les jeux d'engrènement des éléments 9 et 10 du réducteur 8.

Dans tous les cas, la partie en élastomère 20 ou 24 doit posséder une raideur angulaire permettant d'obtenir les propriétés mécaniques requises, afin de supprimer ou du moins d'atténuer les vibrations et bruits engendrés par les jeux des éléments du réducteur 8, ceci tout en assurant la transmission convenable de la rotation et du couple moteur, entre l'arbre 15 du moteur électrique d'assistance 7 et la vis sans fin 9 du réducteur 8.

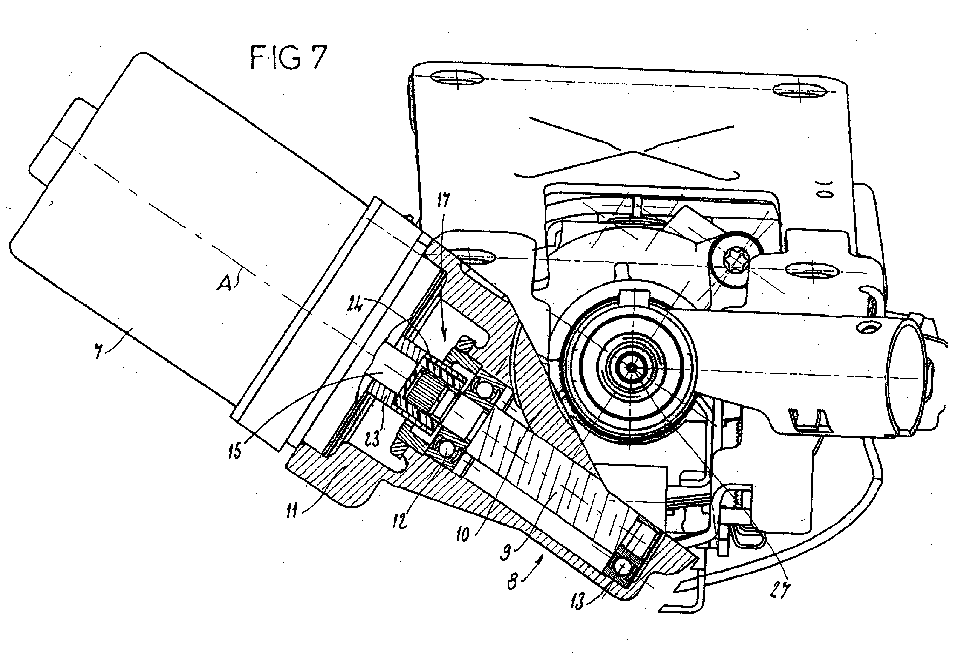

La figure 7, sur laquelle les éléments correspondant à ceux précédemment décrits sont désignés par les mêmes repères, illustre une application de l'accouplement élastique 17 selon les figures 5 et 6, c'est-à-dire constitué de deux parties 23 et 24 seulement, à savoir une pièce métallique 23 et une partie en élastomère 24. Comme déjà précédemment décrit, la pièce métallique 23 est ajustée sur l'extrémité de l'arbre moteur 15, tandis que la partie en élastomère 24 est liée à l'arbre d'entrée (vis sans fin 9) du réducteur 8. Cette figure 7 illustre l'application de l'invention à une direction assistée électrique, dans laquelle l'ensemble moto-réducteur 7-8 agit sur la colonne de direction 27.

## Revendications

1. Direction assistée électrique pour véhicule automobile, comprenant un moteur électrique d'assistance (7) accouplé, par l'intermédiaire d'un réducteur (8) à vis sans fin (9) et roue tangente (10), à un élément mobile à entraîner (6) de la direction, un accouplement élastique (17), travaillant en torsion, étant placé entre l'arbre (15) du moteur électrique d'assistance (7), ou un élément d'entraînement (16) directement lié à cet arbre (15), d'une part, et la vis sans fin (9) du réducteur (8), constituant l'arbre d'entrée de ce réducteur (8), disposée coaxialement à l'arbre (15) du moteur électrique d'assistance (7) ou à l'élément d'entraînement (16) directement lié à cet arbre (15), d'autre part, de manière à filtrer ou atténuer les vibrations et bruits liés aux jeux de fonctionnement du réducteur (8), l'accouplement élastique (17) étant composé d'au moins une partie métallique rigide (18, 19), liée à l'un des éléments à accoupler, du côté du moteur (7) ou du réducteur (8), et d'une partie élastiquement déformable (20), en élastomère ou en caoutchouc, possédant une raideur angulaire (K) adaptée, **caractérisée en ce que** l'accouplement élastique (17) se compose de deux noyaux métalliques (18, 19) coaxiaux, réunis l'un à l'autre par surmoulage d'une partie intermédiaire élastiquement déformable (20), les deux noyaux métalliques (18, 19) étant rigidement liés, l'un (18), à l'arbre (15) du moteur électrique d'assistance (7) ou à l'élément d'entraînement (16) lié à cet arbre (15), et l'autre (19), à la vis sans fin (9) du réducteur (8).

2. Direction assistée électrique selon la revendication 1, **caractérisée en ce que** les deux noyaux métalliques (18, 19) de l'accouplement élastique (17) comportent des conformations extérieures (21) ou intérieures (22), pour leur liaison par complémentarité de formes à l'arbre (15) du moteur électrique d'assistance (7) ou à l'élément d'entraînement (16) lié à cet arbre (15), ou à la vis sans fin (9) du réducteur (8).

3. Direction assistée électrique pour véhicule automobile, comprenant un moteur électrique d'assistance (7) accouplé, par l'intermédiaire d'un réducteur (8) à vis sans fin (9) et roue tangente (10), à un élément mobile à entraîner (6) de la direction, un accouplement élastique (17), travaillant en torsion, étant placé entre l'arbre (15) du moteur électrique d'assistance (7), ou un élément d'entraînement (16) directement lié à cet arbre (15), d'une part, et la vis sans fin (9) du réducteur (8), constituant l'arbre d'entrée de ce réducteur (8), disposée coaxialement à l'arbre (15) du moteur électrique d'assistance (7) ou à l'élément d'entraînement (16) directement lié à cet arbre (15), d'autre part, de manière à filtrer ou atténuer les vibrations et bruits liés aux jeux de fonctionnement du réducteur (8), l'accouplement élastique (17) étant composé d'au moins une partie métallique rigide (23), liée à l'un des éléments à accoupler, du côté du moteur (7) ou du réducteur (8), et d'une partie élastiquement déformable (24), en élastomère ou en caoutchouc, possédant une raideur angulaire (K) adaptée, **caractérisée en ce que** le partie métallique (23) est réunie à la partie élastiquement déformable (24) par surmoulage la partie métallique (23) étant rigidement liée à l'arbre (15) du moteur électrique d'assistance (7) ou à l'élément d'entraînement (16) lié à cet arbre (15), tandis que la partie élastiquement déformable (24) comporte des conformations (26) pour sa liaison directe avec l'extrémité de la vis sans fin (9) du réducteur (8).

4. Direction assistée électrique selon la revendication 3, **caractérisée en ce que** la partie métallique se présente comme un pot (23), dans lequel est surmoulée la partie en élastomère (24), elle-même évidée (25) et pourvue de conformations intérieures (26) pour sa liaison avec la vis sans fin (9) du réducteur (8).

5. Direction assistée électrique selon l'une quelconque des revendications 1 à 4, **caractérisée en ce que** la ou les parties métalliques (18, 19 ; 23) de l'accouplement élastique (17) sont liées, à l'arbre moteur (15) ou à la vis sans fin (9) du réducteur (8), par un ajustement "serré".

## Claims

1. Electrical assisted steering for motor vehicles, comprising an electrical assistance motor (7) coupled, by means of a gearbox (8) with worm (9) and tangent gear (10), to a movable element (6) to be driven of the steering, an elastic coupling (17), working in torsion, being placed between on the one hand the shaft (15) of the electrical assistance motor (7), or a driving element (16) directly connected to this shaft (15), and on the other hand the worm (9) of the gearbox (8), constituting the input shaft of this gearbox (8), disposed coaxially with the shaft (15) of the electrical assistance motor (7) or with the driving element (16) directly connected to this shaft (15), so as to filter or attenuate the vibration and noise relating to the operating clearances of the gearbox (8), the elastic coupling (17) being composed of at least a rigid metal part (18, 19), connected to one of the elements to be coupled, on the same side as the motor (7) or gearbox (8), and an elastically deformable part (20), made from elastomer or rubber, having an adapted angular stiffness (K), **characterised in that** the elastic coupling (17) is composed of two coaxial metal cores (18, 19) joined to each other by insert moulding of an elastically deformable intermediate part (20), the two metal cores (18, 19) being rigidly connected, one (18) to the shaft (15) of the electrical assistance motor (7) or to the driving element (16) connected to the shaft (15), and the other (19) to the worm (9) of the gearbox (8).

2. Electrical assisted steering according to claim 1, **characterised in that** the two metal cores (18, 19) of the elastic coupling (17) comprise external (21) or internal (22) conformations for their connection by complementarity of shapes to the shaft (15) of the electrical assistance motor (7) or to the driving element (16) connected to this shaft (15) or to the worm (9) of the gearbox (8).

3. Electrical assisted steering for motor vehicles, comprising an electrical assistance motor (7) coupled, by means of a gearbox (8) with worm (9) and tangent gear (10), to a movable element (6) to be driven of the steering, an elastic coupling (17), working in torsion, being placed between on the one hand the shaft (15) of the electrical assistance motor (7), or a driving element (16) directly connected to the shaft (15), and on the other hand the worm (9) of the gearbox (8) constituting the input shaft of this gearbox (8), disposed coaxially with the shaft (15) of the electrical assistance motor (7) or with the driving element (16) directly connected to this shaft (15), so as to filter or attenuate the vibration or noise relating to the operating play on the gearbox (8), the elastic coupling (17) being composed of at least one rigid metal part (23), connected to one of the elements to be coupled, on the same side as the motor (7) or gearbox (8), and an elastically deformable part (24), made from elastomer or rubber, having an adapted angular stiffness (K), **characterised in that** the metal part (23) is joined to the elastically deformable part (24) by insert moulding, the metal part (23) being rigidly connected to the shaft (15) of the electrical assistance motor (7) or to the driving element (16) connected to the shaft (15), whilst the elastically deformable part (24) comprises conformations (26) for its direct connection to the end of the worm (9) of the gearbox (8).

4. Electrical assisted steering according to claim 3, **characterised in that** the metal part is in the shape of a pot (23), in which the elastomer part (24) is insert moulded, itself hollowed out (25) and provided with internal conformations (26) for its connection to the worm (9) of the gearbox (8).

5. Electrical assisted steering according to any one of claims 1 to 4, **characterised in that** the metal part or parts (18, 19; 23) of the elastic coupling (17) are connected to the motor shaft (15) or to the worm (9) of the gearbox (8), by a "tight" fitting.

## Patentansprüche

1. Elektrische Servolenkung für Kraftfahrzeuge, die einen elektrischen Hilfsmotor (7) umfasst, der mittels eines Untersetzungsgetriebes (8) mit Endlosschnecke (9) und Schneckenrad (10) mit einem anzutreibenden beweglichen Teil (6) der Lenkung verbunden ist, wobei eine elastische, torsionswirksame Kupplung (17) zwischen der Welle (15) des elektrischen Hilfsmotors (7), oder einem direkt mit dieser Welle (15) verbundenen Antriebsteil einerseits, und der Eingangsschnecke (9) des Untersetzungsgetriebes (8), die die Eingangswelle dieses Untersetzungsgetriebes (8) darstellt, die koaxial zur Welle (15) des elektrischen Hilfsmotors (7) angeordnet ist, oder dem direkt mit dieser Welle (15) verbundenen Antriebsteil (16) andererseits eingesetzt ist, um die Schwingungen und Geräusche, die mit dem Funktionsspiel des Untersetzungsgetriebes (8) verbunden sind, herauszufiltern oder zu dämpfen, wobei die elastische Kupplung (17) aus mindestens einem starren Metallteil (18, 19), das mit einem der anzukuppelnden Teile auf der Seite des Motors (7) oder des Untersetzungsgetriebes (8) verbunden ist, und einem elastisch verformbaren Teil (20) aus Elastomer oder Kautschuk besteht, das eine angepasste Winkelsteifigkeit (K) besitzt,
**dadurch gekennzeichnet, dass**
die elastische Kupplung aus zwei koaxialen Metallkernen (18, 19) besteht, die durch Überformen eines elastisch verformbaren Zwischenteils (20) miteinander verbunden sind, wobei die beiden Metallkerne (18, 19) starr verbunden sind, der eine (18) mit der Welle (15) des elektrischen Hilfsmotors (7) oder dem mit dieser Welle (15) verbundenen Antriebsteil (16), und der andere (19) mit der Endlosschnecke (9) des Untersetzungsgetriebes (8).

2. Elektrische Servolenkung nach Anspruch 1, **dadurch gekennzeichnet, dass** die beiden Metallkerne (18, 19) der elastischen Kupplung (17) äußere (21) oder innere (22) Formgebungen für ihre formkomplementäre Verbindung mit der Welle (15) des elektrischen Hilfsmotors (7) oder dem mit dieser Welle (15) verbundenen Antriebsteil (16), oder mit der Endlosschnecke (9) des Untersetzungsgetriebes (8) umfassen.

3. Elektrische Servolenkung für Kraftfahrzeuge, die einen elektrischen Hilfsmotor (7) umfasst, der mittels eines Untersetzungsgetriebes (8) mit Endlosschnecke (9) und Schneckenrad (10) mit einem anzutreibenden beweglichen Teil (6) der Lenkung verbunden ist, wobei eine elastische, torsionswirksame Kupplung (17) zwischen der Welle (15) des elektrischen Hilfsmotors (7), oder einem direkt mit dieser Welle (15) verbundenen Antriebsteil einerseits, und der Eingangsschnecke (9) des Untersetzungsgetriebes (8), die die Eingangswelle dieses Untersetzungsgetriebes (8) darstellt, die koaxial zur Welle (15) des elektrischen Hilfsmotors (7) angeordnet ist, oder dem direkt mit dieser Welle (15) verbundenen Antriebsteil (16) andererseits eingesetzt ist, um die Schwingungen und Geräusche, die mit dem Funktionsspiel des Untersetzungsgetriebes (8) verbunden sind, herauszufiltern oder zu dämpfen, wobei die elastische Kupplung (17) aus mindestens einem starren Metallteil (18, 19), das mit einem der anzukuppelnden Teile auf der Seite des Motors (7) oder des Untersetzungsgetriebes (8) verbunden ist, und einem elastisch verformbaren Teil (20) aus Elastomer oder Kautschuk besteht, das eine angepasste Winkelsteifigkeit (K) besitzt,
**dadurch gekennzeichnet, dass**
das Metallteil (23) durch Überformung mit dem elastisch verformbaren Teil (24) verbunden ist, wobei das Metallteil (23) starr mit der Welle (15) des elektrischen Hilfsmotors (7) oder mit dem mit dieser Welle (15) verbundenen Antriebsteil (16) verbunden ist, während das elastisch verformbare Teil (24) Formgebungen (26) für seine direkte Verbindung mit dem Ende der Endlosschnecke (9) des Untersetzungsgetriebes (8) umfasst.

4. Elektrische Servolenkung nach Anspruch 3, **dadurch gekennzeichnet, dass** das Metallteil sich wie ein Topf (23) darstellt, in dem das Elastomerteil (24) überformt ist, das wiederum ausgenommen (25) und mit inneren Formgebungen (26) für seine direkte Verbindung mit der Endlosschnecke (9) des Untersetzungsgetriebes (8) ausgestattet ist.

5. Elektrische Servolenkung nach einem der Ansprüche 1 bis 4, **dadurch gekennzeichnet, dass** das oder die Metallteil/e (18, 19; 23) der elastischen Kupplung (17) durch eine "Presspassung" mit der Motorwelle (15) oder der Endlosschnecke (9) des Untersetzungsgetriebes (8) verbunden sind.
